# EUROPEAN PATENT SPECIFICATION

(11) **EP 3 301 320 B1**
(45) Date of publication and mention of the grant of the patent: **29.04.2020**
(21) Application number: 17194080.2
(22) Date of filing: 29.09.2017
(51) Int. Cl.: F16F 9/14

(54) **A ROTARY DAMPER**
DREHDÄMPFER
AMORTISSEUR ROTATIF

(30) Priority: 30.09.2016 TR 201613704
(43) Date of publication of application: 04.04.2018
(73) Proprietor: Matel Hammadde Sanayi Ve Ticaret Anonim Sirketi, 45030 Manisa (TR)
(72) Inventor: ELBEYLI, Metin Murat, Manisa (TR)
(74) Representative: Dericioglu, E. Korhan

(56) References cited:
- EP-A1- 1 650 468
- EP-A2- 0 261 051
- WO-A1-2015/190382
- US-A1- 2006 081 430
- US-B1- 6 393 624
- US-B2- 6 840 355

## Description

### Field of the Invention

The present invention relates to a structurally reinforced rotary damper which enables to acquire proper damper function under different loads by keeping the damper fluid viscosity fixed, and enables the damper fluid to be injected into the damper under vacuum.

### Background of the Invention

The rotary dampers are generally used for providing slow closing function for the door of the product in which they are included as a component. The damper is comprised of a housing and rotor group parts that are rotatable relative to each other. The rotary damper, while being assembled as a component within a system, is operated by fixing the housing part to the system and the rotor being rotary under load, or fixing the rotor to the system and the system being rotary.

The rotary dampers make angularly limited rotations in both directions on the rotary axis. There are rotary dampers which show resistance to load generated by torque applied on the damper by the system in both directions or in only one direction.

When rotary dampers are examined in terms of their inner structures and operation principles, there is at least one flap and a valve piece which is movable between the said flap and the rotary damper housing. The valve piece provides flow control by performing opening/closing, and such systems are currently being used in the technique.

United States Patent document no US6840355, an application known in the state of the art, discloses replacement of damper liquid between damper chambers with partially movable parts between the rotor and the housing, and the alternatives providing control of the said function.

United States Patent document no US6393624, an application known in the state of the art, discloses the change of flow sections according to the rotary moment growing in closing direction in different angular positions in the work time of rotary damper, and the structures providing the said change.

United States Patent document no US2006081430, an application known in the state of the art, discloses a damper device having a casing with a cylindrical inner circumferential surface, a shaft body located in the cylindrical space of the casing and supported in a freely turnable manner, a cover which seals the casing, and viscous fluid stored in a sealed space formed between the shaft body and the casing.

World Intellectual Property Organization document no WO2015190382, an application known in the state of the art, discloses a fluid damper device with which it is possible to suppress lifting of a valve body from a rotary shaft when a rotor is rotated in the direction of opening.

European Patent document no EP1650468, an application known in the state of the art, discloses a damper includes a housing having an opening, a cover over said opening, a rotor rotatably disposed in said housing, said rotor extending outwardly of said housing through said cover, a seal between said cover and said rotor.

European Patent document no EP0261051, an application known in the state of the art, discloses a single or oppposite direction damper hinge has a casing rotatably enclosing a rotor.

Rotary dampers known in the state of the art are formed with the method of filling a specified amount of damper liquid inside the housing piece at a certain stage of the production of and assembling the damper parts later. In order to produce rotary damper compatible with a different rotary momentum value, generally the viscosity of the damper liquid is changed.

In production process of the rotary damper known in the state of the art, during assembling its housing first and then assembling the other parts, leakage of the damper liquid filled into the housing to outside is an unwanted situation. Because, this cause problems in subsequent process steps. For example, in coupling step in which applications such as ultrasonic welding method will be used, the parts to be welded should be clean. Because, the concept of cleaning damper liquid (silicone oil, glycerin, and such fluids with high viscosity) contacting even partially to the welding area is not applicable, and negative effects occur in welding quality even if it is cleaned with proper chemicals to a certain extent.

In order to perform production properly and fast, missing a certain amount of damper liquid in the damper housing and leaving a certain amount of air in the product after its assembly is completed are among the disadvantages of the said common approach.

Having air within the damper liquid has unwanted and measurable consequences relating to enabling the function stability of the product. In rotary damper products including air in fluid volume, product function that will be provided by section change regulations formed according to angular positions in the work time under load and controlling the replacement amount of the fluid and the total fatigue life of the product is negatively affected.

The rotary dampers known in the state of the art are manufactured in certain resistances in order to damp load under different rotary momentums that can be applied. Generally the viscosity of damper liquid is changed in order to obtain dampers with different resistances. For rotary dampers wanted to be acquired in different capacities, using a damper liquid with different viscosity both requires to keep the inconsistencies originating from supply in control, and causes difficulties in production stages of rotary damper relating to the fluid.

In small volume rotary dampers known in the state of the art, tension in form of a twisting is loaded on the rotor parts formed with measurement limitations in volume ratio and carrying the load in each cycle at which the damper operates. Damper rotors operating with loads above a certain rotary moment gets tired and damaged sooner.
When relatively high rotary moments are applied on rotors produced with metal (aluminum, zinc alloys) or polymer (Polyamide + Glass Fiber reinforcement) materials, damage occurs sooner than expected in fatigue-life experiments.

### The Problems Solved with the Invention

The objective of the present invention is to prevent the presence of air in the fluid volume by means of damper liquid injection by taking damper fluid volume under vacuum, and thus provide a rotary damper which enables the stability of product functions and increases production efficiency.

Another objective of the present invention is to provide a rotary damper which enables to perform load damping under rotary moments with different amplitudes without changing the fluid viscosity.

A further objective of the present invention is to provide a rotary damper the resistance of which is increased without expansion in sizes of the system in order to reach large rotary moments.

### Detailed Description of the Invention

A rotary damper developed to fulfill the objectives of the present invention is illustrated in the accompanying figures, in which:

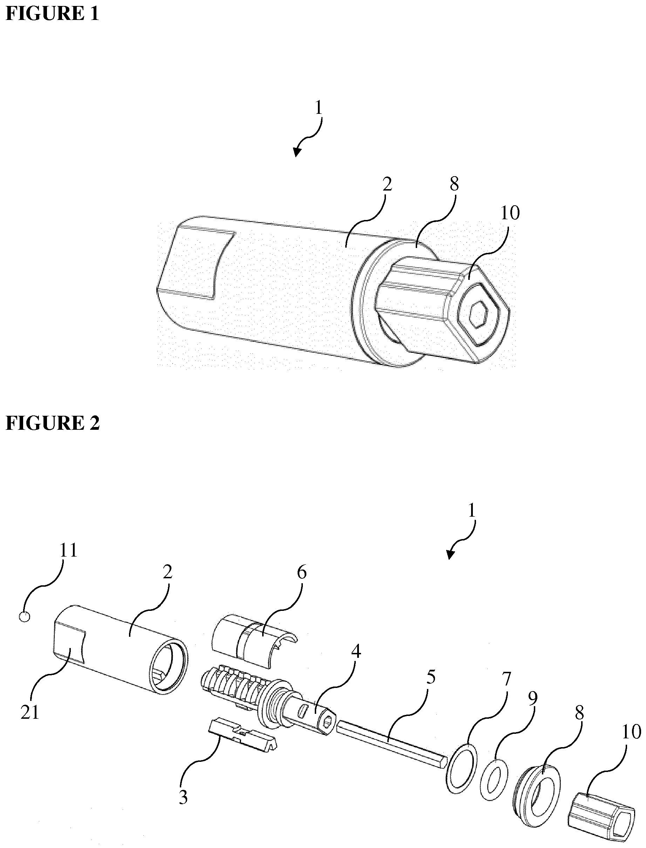

Figure 1 is the perspective view of the rotary damper.
Figure 2 is the exploded perspective view of the rotary damper.

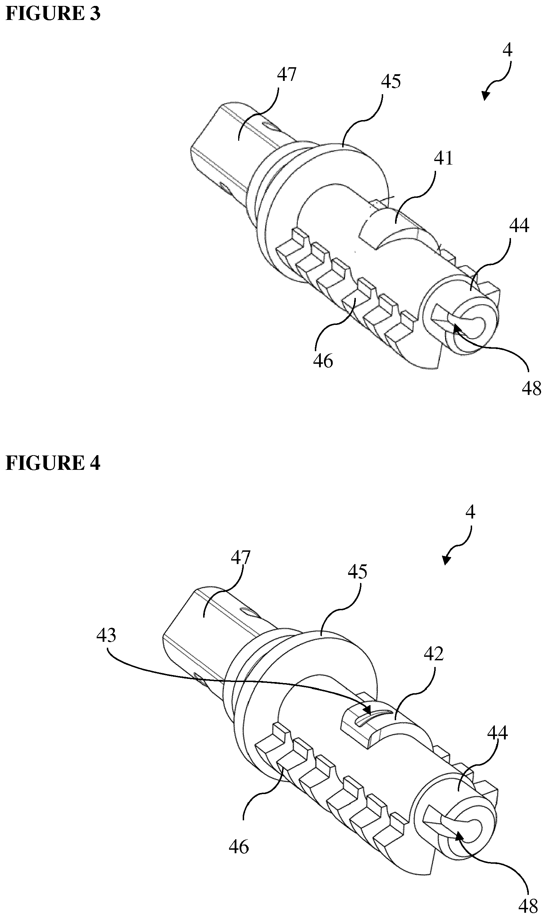

Figure 3 is the perspective view of the rotor.
Figure 4 is the perspective view of the rotor.

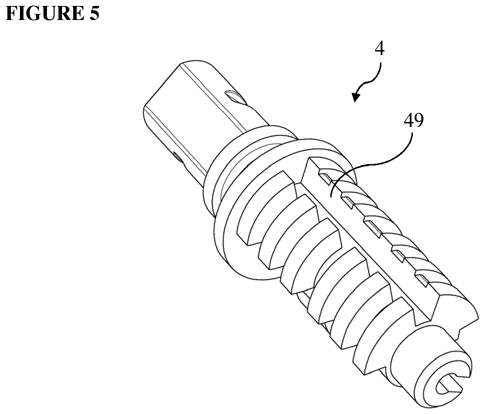

Figure 5 is the perspective view of the rotor.

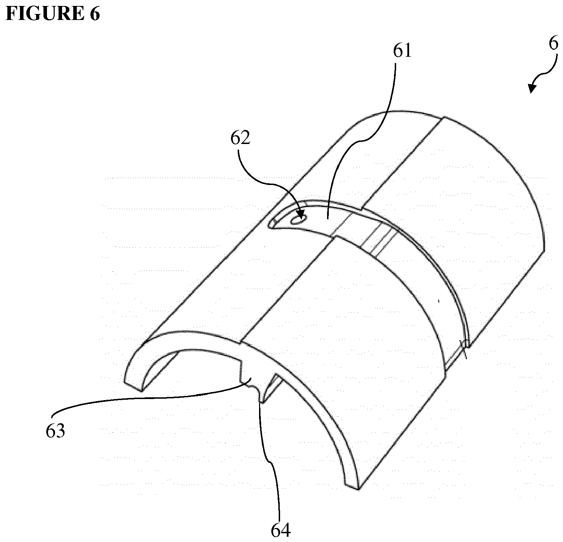

Figure 6 is the perspective view of the valve.

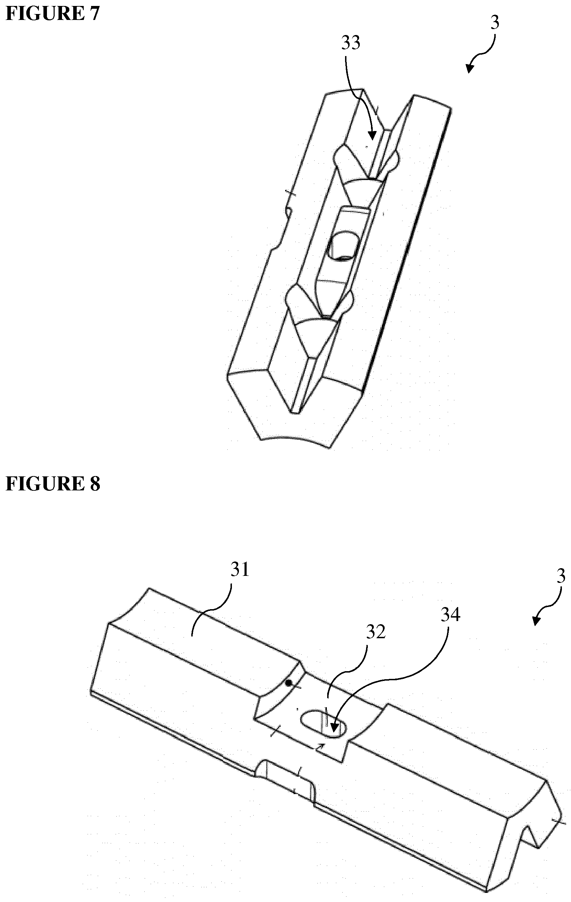

Figure 7 is the perspective view of the bearing.
Figure 8 is the perspective view of the bearing.

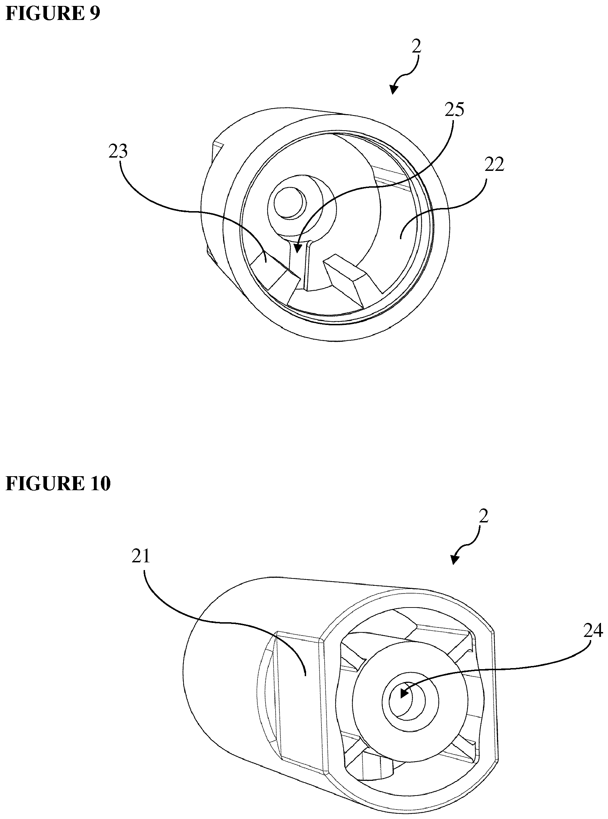

Figure 9 is the perspective view of the housing.
Figure 10 is the perspective view of the housing.
Figure 11 is the lateral cross sectional view of the rotary damper in a first position.
Figure 12 is the A1-A1 cross sectional view of the rotary damper.
Figure 13 is the A2-A2 cross sectional view of the rotary damper.
Figure 14 is the lateral cross sectional view of the rotary damper in a second position.
Figure 15 is the A3-A3 cross sectional view of the rotary damper.
Figure 16 is the A4-A4 cross sectional view of the rotary damper.
Figure 17 is the lateral cross sectional view of the rotary damper in a third position.
Figure 18 is the A5-A5 cross sectional view of the rotary damper.
Figure 19 is the A6-A6 cross sectional view of the rotary damper.
Figure 20 is the lateral cross sectional view of the rotary damper in a fourth position.
Figure 21 is the A7-A7 cross sectional view of the rotary damper.
Figure 22 is the A8-A8 cross sectional view of the rotary damper.
Figure 23 is the partial cross sectional view of the rotary damper.
Figure 24 is the partial cross sectional view of the rotary damper.
Figure 25 is the flow space graphic formed according to operation time of the rotary damper

The components shown in the figures are each given reference numbers as follows:
**1.** Rotary damper
**2.** Housing
   **21.** Connection surface
   **22.** Inner surface
   **23.** Inner rib
   **24.** Filling hole
   **25.** Channel connection opening
**3.** Bearing
   **31.** Bedding surface
   **32.** Cam opening
   **33.** Bearing channel
   **34.** Injection hole channel
**4.** Rotor
   **41.** First cam face
   **42.** Second cam face
   **43.** Cam channel
   **44.** Tail
   **45.** Flange
   **46.** Supporting rib
   **47.** Placement opening
   **48.** Tail opening
   **49.** Sealing rib
**5.** Support pin
**6.** Valve
   **61.** Channel
   **62.** Orifice
   **63.** Protrusion
   **64.** Flexible surface
**7.** Metal washer
**8.** Cover
**9.** Sealing member
**10.** Adapter
**11.** Insert piece

A rotary damper (1); which performs load damping function while rotating in one direction in the work time, rotates in other direction without creating resistance and enables to obtain proper function under different loads by keeping the viscosity liquid stable, and to inject the liquid under vacuum; essentially comprises
- at least one housing (2) in which a space comprised of cylindrical or partially cylindrical and curvilinear sections or only of curvilinear sections is made,
   - at least one connection surface (21) which is in form of an opening made on the outer cylindrical surface of the housing (2),
   - at least one inner surface (22) which forms the inner part of the cylindrical shaped housing (2),
   - at least one inner rib (23) which extends in form of a protrusion above the inner surface (22) towards the center,
   - at least one filling hole (24) which is made on the central axis of the housing (2),
   - at least one channel connection opening (25) which is made on the flat surface of the housing (2) on which the filling hole (24) is positioned, which has a channel shape starting from the filling hole (24) and extending till the inner rib (23),
- at least one bearing (3) which is placed inside the housing (2) and enables to control the flow, and has an trapezoid shape,
   - at least one bedding surface (31) which is formed by opening the short edge of the bearing (3) in form of a semi-arc,
   - at least one cam opening (32) which is in form of an opening made on the bedding surface (31),
   - at least one V shaped bearing channel (33) made on the long edge of the bearing (3),
   - at least one injection hole channel (34) which is made on the cam opening (32) and extends until the inner part of the bearing channel (33),
- at least one rotor (4) which is placed inside the housing (2), and which has a cylindrical or curvilinear body section that can rotate such that its central axis will be same as the housing (2),
   - at least one first cam face (41) which is located on the cylinder surface of the rotor (4) and which has a camber shaped structure,
   - preferably at least one second cam face (42) which forms an inclined surface on the first cam face (41),
   - preferably at least one cam channel (43) which is made on the first cam face (41),
   - at least one tail (44) which is located at the end of the cylindrical shaped rotor (4), and the diameter of which is smaller than the diameter of the rotor (4),
   - at least one flange (45) which is located on the rotor (4) and which has a cylindrical shape concentrical with the rotor (4),
   - at least one supporting rib (46) which is located on the cylindrical surface of the rotor (4) and which has a protrusion shape,
   - at least one placement opening (47) which is made along the central axis of the rotor (4),
   - at least one tail opening (48) which is made on the tail (44),
- at least one support pin (5) which is placed into the placement opening made on the rotor (4),
- at least one valve (6) which is placed between the rotor (4) and the housing (2), which has an arc shape, and which controls the fluid movement by being dragged with the movements of the rotor (4),
   - at least one channel (61) which is made on the outer surface of the arc shaped valve (6),
   - at least one orifice (62) which is made on the channel (61),
   - at least one protrusion (63) which is located on the inner surface of the arc shaped valve (6) and which extends linearly,
   - at least one flexible surface (64) which has an elastic structure extending from the end point of the protrusion (63),
- at least one metal washer (7) which is placed on the rotor (4),
- at least one cover (8) which is used for covering the open surface of the housing (2),
- at least one sealing member (9) which is placed between the housing (2) and the cover (8),
- at least one insert piece (11) which is placed into the filling hole (24) located on the housing (2), and which enables the filling hole (24) to be closed tightly after the injection of damper liquid under vacuum,
- preferably an adapter (10) which enables the rotor (4) to be compatible with connections with various geometric shapes and dimensions.

The inventive rotary damper (1) performs load damping function while rotating in one direction in the work time, and it rotates in other direction without creating resistance. The inventive rotary damper (1) performs load damping function while rotating clockwise (CW), and no-load operation function while rotating counter clockwise (CCW). The rotary damper (1) structure is symmetrical for exact opposite functions. Measurable functions of symmetrical structures are equal.

In order to operate the rotary damper (1) as a component of a system, the damper housing (2) is connected to the fixed part of the system, and the rotor (4) is connected to the part of the system wanted to be covered with effect of the damper. The connection of the rotary damper (1) can be carried out in the exact opposite way of the said connection according to the features of the system depending on the requirement of the user. In the detailed descriptions, it is assumed that the rotary damper (1) housing (2) is kept fixed, and the rotor (4) is actuated.

The rotary damper (1) has a housing (2) comprising a cylindrical shaped space and forming the outer structure. The main purpose of the rotary damper (1) parts is to divide the fluid volume into two compartments. The damping function of the rotary damper (1)is enabled by controlling the passage of damper liquid between these two compartments in the work time. A rotary damper (1) of the present invention has a housing (2) in which an opening comprised of cylindrical or partially cylindrical and curvilinear section or only of curvilinear sections is made. A connection surface (21) is provided on the cylindrical surface of the housing (2), and the connection surface (21) has a hollow shape. An inner surface (22) forms the inner part of the cylindrical shaped housing (2). There are inner ribs (23) in form of a protrusion extending above the inner surface (22) towards the center. Furthermore, a filling hole (24) is made on the central axis of the housing (2). A channel connection opening (25) which has a channel shape starting from the filling hole (24) and extending till the inner rib (23) is made on the flat surface of the housing (2) on which the filling hole (24) is positioned.

A bearing (3) is placed into the housing (2). There is a bedding surface (31) which is formed by opening the short edge of the bearing (3) in form of a semi-arc, and a hollow shaped cam opening (32) is made on the bedding surface (31). A V shaped bearing channel (33) is made on the long edge of the bearing (3). There is an injection hole channel (34) which is made on the cam opening (32) and extends until the inner part of the bearing channel (33).

A rotor (4) is placed inside the housing (2), and has a cylindrical or curvilinear body section that can rotate such that its central axis will be same as the housing (2). The bearing (3), when coupled with the housing (2), comprises the slot which completes the injection line enabling the damper liquid filling process to be performed under rotary damper (1) fluid vacuum and also which is the counterpart of the cam-like structure enabling varying flow section management during rotations of the rotor (4). There is a first cam face (41) which is located on the cylinder surface of the rotor (4) and which has a camber shaped structure. In a preferred embodiment of the invention, there is a second cam face (42) on the surface of the first cam face (41) forming an inclined surface, and a cam channel (43) is made on the second cam face (42) for a more sensitive section change. There is a tail (44) which is located at the end of the cylindrical shaped rotor (4), and the diameter of which is smaller than the diameter of the rotor (4). There is a flange (45) on the rotor (4), and the flange (45) has a cylindrical shape concentrical with the rotor (4). There is a supporting rib (46) on the cylinder surface of the rotor (4), and the supporting rib (46) is in form of a protrusion. In a preferred embodiment of the invention, a plurality of supporting ribs (46) is used on the rotor (4). The supporting ribs (46) that are used are positioned such that they will contact the inner surface of the valve (6). A plurality of ribs provided on the rotor (4) is positioned with intervals in between them. The flexible surface (64) of the valve (6) flexes with the contact pressure with the sealing rib (49) provided on the supporting ribs (46), and provides sealing. A placement opening (47) is made along the central axis of the rotor (4). A tail opening (48) is made on the tail (44). A support pin (5) is placed into the rotor (4). In a preferred embodiment of the invention, the rotor (4) is manufactured from a thermo-plastic (PA, PBT, POM) material. In order that the rotor (4) provides rigidity and resistance under large loads, the support pin (5) having a hexagonal cross section is placed inside the rotor (4).

A valve (6) is placed between the rotor (4) and the housing (2), and the valve (6) is dragged with the movements of the rotor (4) and controls the displacement movements. There is a channel (61) made on the outer surface of the arc shaped valve (6), and an orifice is made (62) on the channel (61). In a preferred embodiment of the invention, by changing the cross section area of the orifice (62), dampers compatible with loads under different rotary moments with fixed viscosity fluid is obtained. There is a protrusion (63) on the inner surface of the arc shaped valve (6), and the protrusion (63) extends above the valve (6) in a straight way. There is a flexible surface (64) which has an elastic structure extending from the end point of the protrusion (63). A metal washer (7) is placed on the rotor (4). There is a cover (8) which is used for covering the open surface of the housing (2). In a preferred embodiment of the invention, the rotor (4) is manufactured from a glass-fiber reinforced thermo-plastic (PA, PBT, POM) material. Additionally, there is a metal washer (7) enabling that ultrasonic plastic welding is performed between the housing (2) and the cover (8) parts without any problems. A sealing member (9) is placed between the housing (2) and the cover (8). There is an insert piece (11) which is placed into the filling hole (24) located on the housing (2), and which enables the filling hole (24) to be closed tightly after the injection of damper liquid under vacuum. The insert piece (11) is manufactured from thermo-plastic or metal materials which may be inform of a sphere or cylinder and which enables to tightly close the filling hole of the housing (2) after the injection of damper liquid under vacuum.

The housing (2) has a cylindrical structure, or structural details that can position itself around the central axis of a cylindrical space and rotate. By means of the cross sectional shaped connection surface (21) provided on the outer surface of the housing (2), the housing (2) is connected to the area where desired. When the assembly of the other parts is completed, the inner part of the housing (2) has a structure providing the relations of changing the flow openings required in the work time and sealing relations at the same time. When the assembly is completed, the housing (2) comprises the main structure of the injection line enabling the damper liquid to be filled under vacuum. In a preferred embodiment of the invention, the housing (2) is manufactured from a glass-fiber reinforced thermo-plastic (PA, PBT, POM) material. In a preferred embodiment of the invention, the housing (2) can also be comprised of aluminum or zinc alloys.

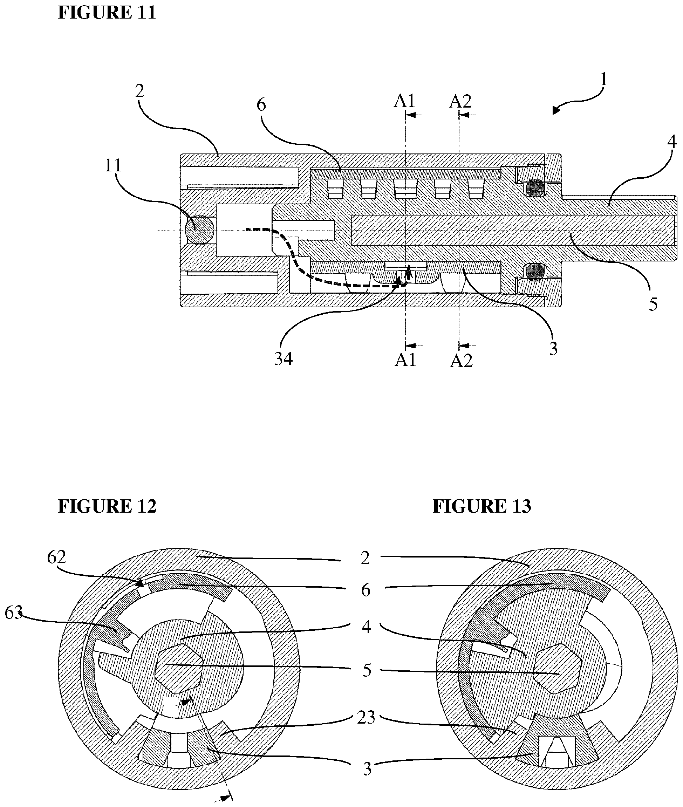

The structural details of the bearing (3) forms the injection line which is provided both for controlling the flow openings with the rotor (4) in the work time and filling the damper liquid (shown with dashed lines in Figure 11). The bearing (3) is tightly fitted into the slot formed between the inner ribs (23) located in the housing (2). By means of the said tightness, both bedding surface (31) of the bearing (3) is connected with the inner surface (22) inside its slot within the housing (2), and the lateral surfaces of the bearing (3) are connected with the inner surfaces of the structural details which form the slot inside the housing (2) and the length of which (3) is equal to the length of the bearing (3) with the increased surface contact pressures, and this provides required sealing in the work time. When the assembly process is completed, one of the end parts of the bearing (3) part is in contact with the inner surface (22) of the housing (2) with which the other parts in the housing (2) are also in relation, and the other bearing (3) end surface is in contact with the inner rib (23) formed with the flange (45). Forming the said contact with a certain amount of tightness is provided in ultrasonic welding stage of the mounting. In order to create certain tightness relations, it can be preferred that the bearing (3) part is manufactured from a thermo-plastic material. The bearing (3) has a frictional relationship with the rotor (4) having a rotary movement in the work time, and has a surface contact with the rotor (4) part thus providing sealing. Under these conditions, it is possible to prefer POM or PTFE material for bearing (3). This part can be used as it is in symmetrical structures, its symmetry is not required.

The rotor (4) is positioned in the cylindrical slot within the housing (2) of the cylindrical structure forming the tail (44) part on one side, and it is positioned by bedding the rotor (4) flange in the cylindrical slot located on the inlet part of the housing (2) on the other side. In the work time, the main cylindrical housing (2) structure of the rotor (4) and the cam structure providing the change of the flow opening depending on position are in relation with the tightness providing sealing under certain contact pressures with the bearing (3) part. The cylindrical housing (2) structure of the rotor (4) is in continuous contact with the bedding surfaces (31) of the bearing (3) part with a certain amount of tightness. A constant sealing is provided between the surfaces where the housing (2), the bearing and the rotor (4) contacts each other.

The cam opening (32) of the bearing (3) part changes the flow opening of the first cam face (41) and the second cam face (42) structures located on the rotor (4) depending on the rotor (4) position in the work time. Depending on the position of the rotor (4), when the surfaces of the first cam face (41) and the second cam face (42) changing their flow openings are in contact with the surfaces of the bearing (3) part located in the cam opening (32), a certain amount of tightness is acquired, and a controlled sealing is provided in this area.

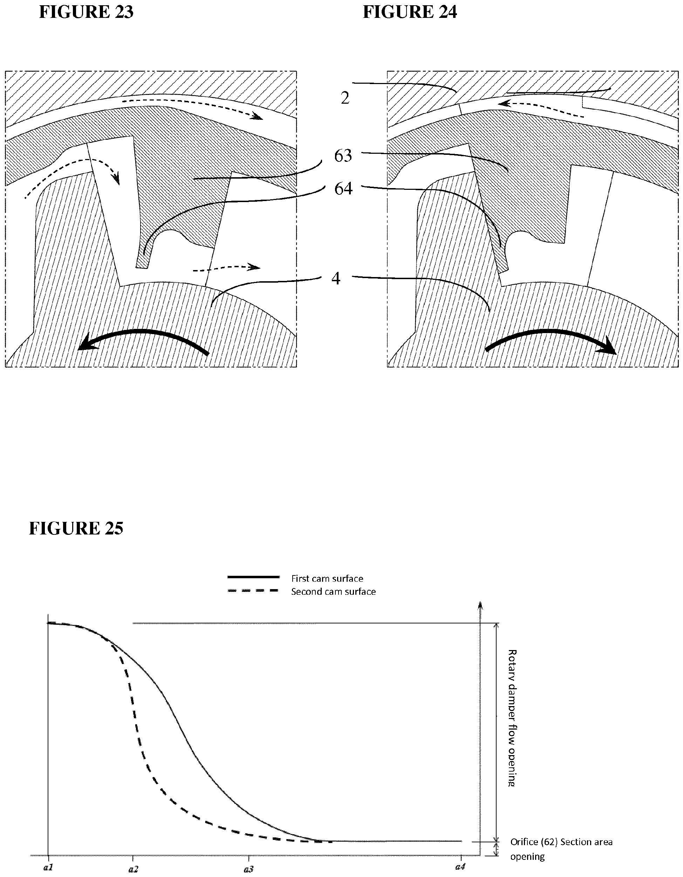

It is possible to use the first cam face (41) and the second cam face (42) structures located on the rotor (4) for flow opening control applications the start and end values of which are same, but which can be expressed with different curves (shown in Figure 25).

After the assembly, the inner surface of the rotor (4) flange (45) has a contact relation with the outer surfaces of the inner ribs (23) within the housing (2) and its lower surface comprising the tail (44) part of the rotor (4) has a contact relation with the bottom surface of the housing (2) in a certain amount of tightness; and thus the sealing required in the work time is provided.

The valve (6) is provided between the rotor (4) and the housing (2). It moves together with the rotor (4) on the central axis of the rotary damper (1) system. It has a contact relation both with the rotor (4) and the housing (2) having a certain rate of tightness. Therefore, the sealing required in the work time is provided. Depending on the rotary movements of the rotor (4) in both directions, it opens or closes the flow openings originating from the relations both with the rotor (4) and the housing (2). The valve (6) is located on the supporting ribs (46) provided on the rotor (4). When the inner surfaces of the valve (6) are in contact with the supporting ribs (46) of the rotor, the flow takes place in the openings between the supporting ribs (46) and the valve (6) depending on the rotating direction of the rotor (4). The protrusion (63) located on the inner part of the valve (6) piece enables the valve (6) to be rotated by the rotor (4), and it also opens or closes the fluid passage through the channels formed between the valve (6) and the rotor (4).

Figure 23 shows the relation between the valve (6) and the rotor (4) and the damper liquid changing its place in case the rotary damper (1) creating resistance in clockwise (CW) direction rotates in counter clockwise direction (CCW) of its rotor (4). The protrusion (63) enabling the valve (6) to be rotated is located in the space between the supporting ribs (46) of the rotor (4). When the valve (6) is rotated in different directions, there are movement limits in extend of being able to perform opening and closing of the flow. One surface of the protrusion (63) enabling the valve (6) to be rotated is in contact with the supporting ribs (46) of the rotor (4). In this case, it is enabled that the flow coming from the channels created between the supporting ribs (46) of the rotor passes to the other side freely. In that case, the damper operates freely, in other words it easily rotates back. In conclusion, this function which the valve (6) area performs together with the rotor (4) makes the movement that does not create resistance in free rotation direction possible.

Figure 24 shows the function of the valve (6) in case the rotor (4) of the rotary damper (1) rotates in clockwise direction. In this case, the protrusion (63) on the valve (6) structure is dragged by being contacted by the sealing rib (49) creating a planar area connects the supporting ribs (46) of the rotor (4). During this dragging, the flexible surface (64) of the valve (6) changes its form under a contact pressure increased by the sealing rib (49) surface of the rotor (4), thereby providing a sealing. In that case, flow is stopped through the channels formed between the supporting ribs (46) of the rotor (4).

The valve (6) is also in relation with the inner surface areas (22) which are provided in the inner part of the housing (2) and enable an additional flow opening to be closed or opened depending on the position.

When the clockwise rotation of the rotor (4) starts, the said flow opening allows flow in a certain angular area; when the said angular area is passed while the movement is continuing in the same direction and sectional change takes place in the inner surface (22) area of the housing (2), the flow opening is closed by the valve (6). The said flow opening control provides a wide flow section for example under the increasing rotary moment applied by the cover parts (furniture, toilet cover, etc.) connected to the damper and moving under the effect of gravitational force onto the rotary damper (1) and until a certain rotary moment is reached. The flow realized until said flow opening is closed by the valve (6) passes through the cannel (61) area located on the upper part of the valve (6) piece, and it is directed to the other side of the damper inner volume. The valve (6) reaching the section change in the inner surface (22) of the housing (2) sweeps the surface with the edge line where its surfaces are connected, and provides sealing in this area.

The valve (6) piece is the part of the system which is subjected to friction most between the housing (2) and the rotor (4). For this reason, it is favorable to manufacture the valve (6) from a thermo-plastic (for example POM) material.

After the assembly, one of the lateral surfaces of the valve (6) has a contact relation with the bottom surface of the housing (2) in a certain level of tightness, and the other surface of the valve (6) has a contact relation with the surface of the rotor (4) flange (45) remaining on the inner part in a certain level of tightness, thereby providing the sealing required in the work time.

In the rotary damper (1) the assembly of which is completed, the sealing member (9) placed into the opening on the rotor (4) is in contact with the inner space of the cover (8) piece. It provides the sealing of the system which operates by rotation. The cover (8) and the housing (2) are connected together by means of ultrasonic welding method, and contact pressure is created with the lower surface of the cover (8) in order to obtain the desired tightness in the inner structure. There is a metal washer (7) between the lower surface of the cover (8) and the flange (45) of the rotor (4). The metal washer (7) prevents the formation of friction losses in this area, and enables the ultrasonic welding operation to be successful.

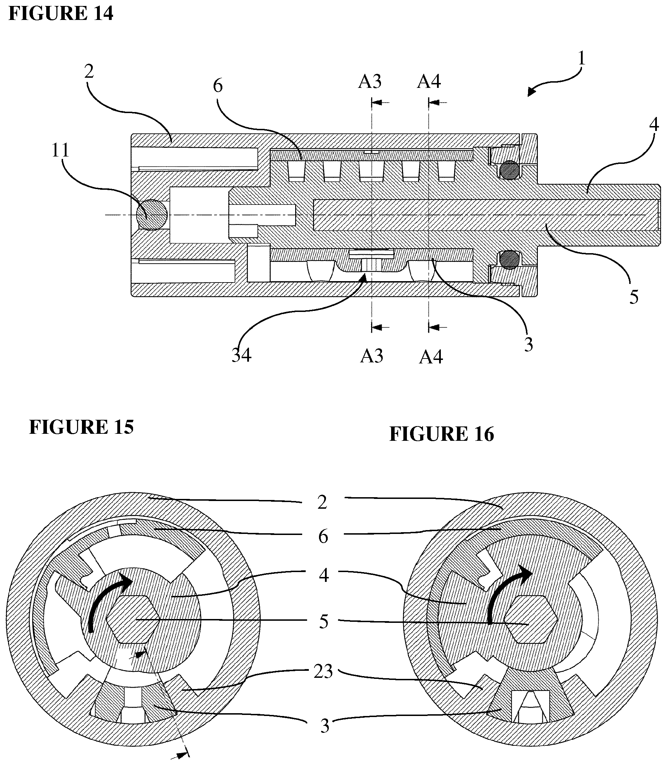

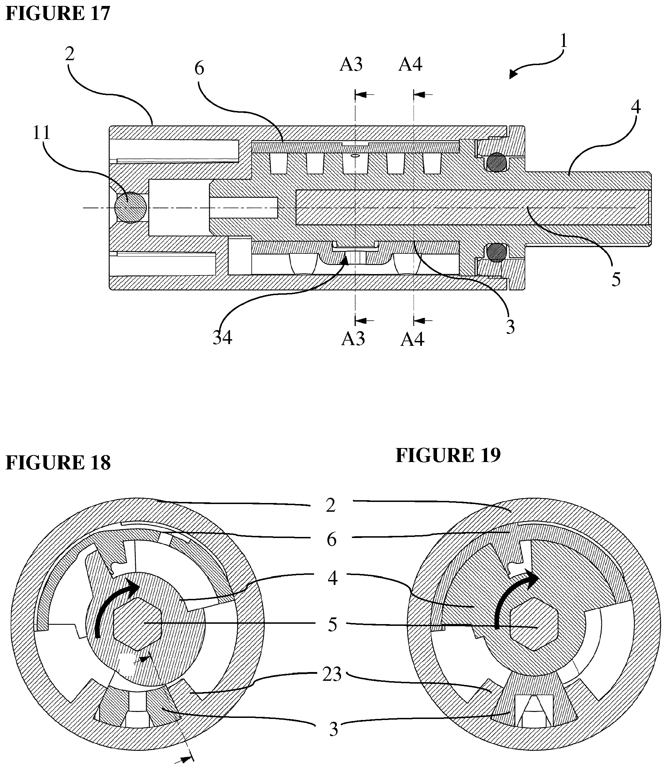

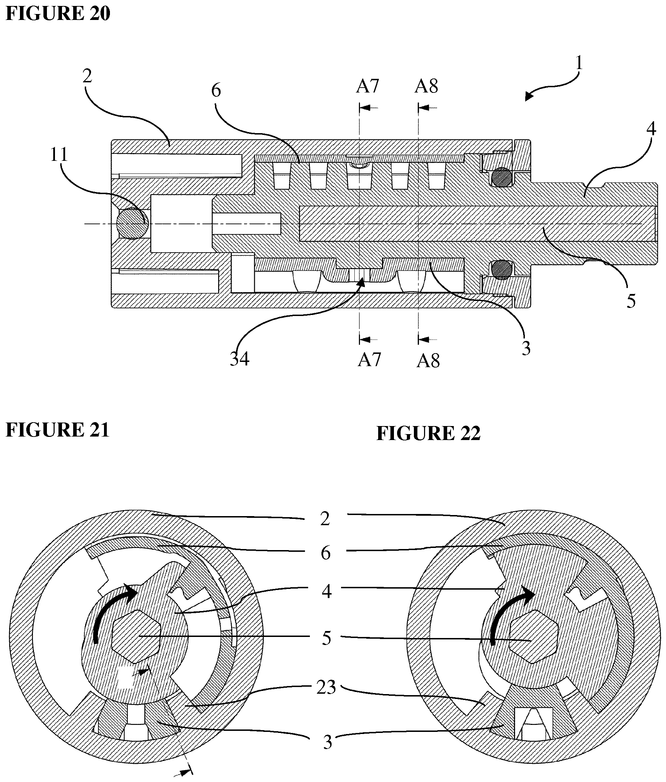

The operation time and the change of the flow openings of the rotary damper (1):
- Its first position (a1) (shown in Figure 11): the rotary damper (1) has completed its idle return and it is ready to start its closing function under load. All of the flow openings are in open position, and the flow opening in the bearing cam opening (32) has the largest section area.
- Its second position (a2) (shown in Figure 14): Rotary damper (1) has started to operate under load. The rotor (4) has started to be dragged by sliding under the valve (6) piece and closing the flow openings between the valve (6) and the rotor (4). In the meantime, it is stated to narrow down the flow opening in the bearing cam opening (32) area. The flow opening between the valve (6) and the housing (2) is open and allows flow.
- Its third position (a3) (shown in Figure 17): The dragged valve (6) has reached the second surface area of the housing (2), and the flow opening in between them has completely been closed. The flow opening in the bearing cam opening (32) area has been significantly narrowed down.
- Its third fourth (a4) (shown in Figure 20): The cam structures (41 or 42) on the rotor (4) have completely closed the flow opening in the bearing cam opening (32) area and the final point has been reached by continuing to operate as such with a certain angular movement.

The solution in order to provide proper function under different loads by keeping the viscosity of the rotary damper (1) liquid fixed:
In order to being able to use a fixed viscosity fluid in obtaining rotary damper (1) that can operate under different loads, it is needed to provide work time section opening change. The proper functions of the dampers having fixed fluid viscosity and being operated under different loads are acquired by changing the cross sectional area of the orifice (62) formed in the channel area (61) on the valve (6).

In work time of the rotary damper (1) in clockwise (CW) direction, the flow openings are changed by the rotor (4) and the valve (6). Acceptable damper function times under different loads are provided by increasing or decreasing the total flow cross sectional area in any position of the work time with a constant value formed by the orifice (62). The orifice (62) functions as a by-pass channel having a fixed cross sectional area value in movements of the rotary damper (1) in both directions.

According to the operating principle of the rotary damper (1), it is understood that the cross sectional area of the orifice (62) should be narrowed for large loads, and widened for small loads.

The flow openings formed by the first cam face (41) placed on the rotor (4) depending on the work times of the rotary damper (1) are shown in Figure 25. Furthermore, the flow openings formed by the second cam face (42) according the work times of the rotary damper (1) are shown in Figure 25. As it can be understood from the graphic shown in Figure 25, rotary dampers (1) suitable for relatively large loads are formed by narrowing down the sectional area of the orifice (62) provided on the valve (6). Furthermore, rotary dampers (1) suitable for relatively small loads by increasing the sectional area of the orifice (62) provided on the valve (6).

In graphic shown in Figure 25, it is shown that acceptable damper function times under different loads are provided by increasing or decreasing the total flow cross sectional area in work time positions of the rotary damper (1) with a constant value formed by the orifice (62).

In a preferred embodiment of the invention, the orifice (62) on the valve (6) can be prepared with thermo-plastic injection molding method or an additional puncturing process depending on the production requirements.

The structural solution provided for injection of rotary damper (1) liquid under vacuum:
One of the important features of the invention is the structural solution which it provides for filling the rotary damper (1) liquid under vacuum. In this solution, a line is provided which starts from the filling hole (24) of the rotary damper (1) provided on the housing (2) with the connection of the housing (2) and the bearing (3) parts, and which is formed by respectively limiting the space wherein the rotor (4) tail (44) part is bedded inside the housing (2), the channel (61) connection opening located inside the housing (2), and the bearing channel (33) under the bearing (3) with the housing (2), and which ends by the injection hole channel (34) provided on the bearing (3) part opening to the liquid volume of the rotary damper (1).

The said line being open or closed for filling is related to the positions of the rotor (4) in rotation movement. In the rotary damper (1) the assembly of which is completed and is ready for filling, "the first position" (a1) is also the position in which the line formed for filling the rotary damper (1) liquid is completely open. Because, the connection hole located on the tail (44) part of the rotor (4) keeps the injection line of the rotor (4) open only in "first position" (a1). The "first position" (a1) of the rotor (4) is also suitable in terms of connection of the fluid volume with the injection line, because the first cam face (41) and the second cam face (42) structures located on the rotor (4) and controlling the flow section allow the cam opening (32) formed between the bearing (3) and the rotor (4) to connect with the fluid volume in the widest dimension in first position.

In the rotary damper system (1) the assembly of which is completed and present in its first position, the fluid first passes through the injection line, and then spreads to the cam opening (32) through the injection hole channel (34) on the bearing (3), and to all of the inner openings from there by means of using a special injection system which connects to the filling hole in the rear part of the housing (2) by providing sealing and after taking the inner openings of the rotary damper (1) under vacuum first, by starting the injection of the damper liquid without changing the sealing or vacuum conditions. Airtight filling is realized by means of the said channel structure.

An insert piece (11) placed into the filling hole (24) located on the housing (2) is positioned by nailing by means of using a special equipment in order to cut the connection of the rotary damper (1) with the outer environment after filling and to tightly close it. Since the filling hole (24) is a cylindrical opening, the insert piece (11) which is manufactured from thermo-plastic or metal material can be in spherical or cylindrical structure.

The solution provided for increasing the rigidity and resistance of the rotary damper (1):
When the rotor (4) is manufactured from one of the thermo-plastic materials (PA, PBT, POM), it is supported with a metal piece having high strength values so that it can have a long fatigue life under relatively large loads and it has rigidity. In the rotor (4) structure, a support pin (5) in a sufficient length can be placed inside the rotor (4) during production preferably with thermo-plastic injection molding in order to increase twisting resistance. The support pin (5) can have a rectangle, eclipse, cylindrical, sections with a plurality of straight edges or triangle sectional area geometry that can be formed with minimum number of edges. In a preferred embodiment of the invention, a support pin (5) having a hexagonal section is preferred in terms of suitability to its function, production and application easiness. The support pin (5) having a certain surface roughness or presence of various figures on the surface enables the polymer material to hold on to the support pin (5) better.

## Claims

1. A rotary damper (1); which performs load damping function while rotating in one direction in the work time, rotates in other direction without creating resistance and enables to obtain proper function under different loads by keeping the liquid viscosity stable, and to inject the liquid under vacuum; essentially comprising
- at least one housing (2) in which a space comprised of cylindrical or partially cylindrical and curvilinear sections or only of curvilinear sections is made,
- at least one connection surface (21) which is in form of an opening made on the outer cylindrical surface of the housing (2),
- at least one inner surface (22) which forms the inner part of the cylindrical shaped housing (2),
- at least one inner rib (23) which extends in form of a protrusion above the inner surface (22) towards the center,
- at least one filling hole (24) which is made on the central axis of the housing (2),
- at least one channel connection opening (25) which is made on the flat surface of the housing (2) on which the filling hole (24) is positioned, which has a channel shape starting from the filling hole (24) and extending till the opening between the inner ribs (23),
- at least one bearing (3) which is placed inside the housing (2) and enables to control the flow, and has an trapezoid shape,
- at least one bedding surface (31) which is formed by opening the short edge of the bearing (3) in form of a semi-arc,
- at least one cam opening (32) which is in form of an opening made on the bedding surface (31),
- at least one V shaped bearing channel (33) made on the long edge of the bearing (3),
- at least one injection hole channel (34) which is made on the cam opening (32) and extends until the inner part of the bearing channel (33),
- at least one rotor (4) which is placed inside the housing (2), and which has a cylindrical or curvilinear body section that can rotate such that its central axis will be same as the housing (2),
- at least one first cam face (41) which is located on the cylinder surface of the rotor (4) and which has a camber shaped structure,
- at least one tail (44) which is located at the end of the cylindrical shaped rotor (4), and the diameter of which is smaller than the diameter of the rotor (4),
- at least one flange (45) which is located on the rotor (4) and which has a cylindrical shape concentrical with the rotor (4),
- at least one supporting rib (46) which is located on the cylindrical surface of the rotor (4) and which has a protrusion shape,
- at least one placement opening (47) which is made along the central axis of the rotor (4),
- at least one tail opening (48) which is made on the tail (44),
- at least one support pin (5) which is placed into the placement opening made on the rotor (4),
- at least one valve (6) which is placed between the rotor (4) and the housing (2), which has an arc shape, and which controls the fluid movement by being dragged with the movements of the rotor (4),
- at least one channel (61) which is made on the outer surface of the arc shaped valve (6),
- at least one orifice (62) which is made on the channel (61),
- at least one protrusion (63) which is located on the inner surface of the arc shaped valve (6) and which extends linearly,
- at least one flexible surface (64) which has an elastic structure extending from the end point of the protrusion (63),
- at least one metal washer (7) which is placed on the rotor (4),
- at least one cover (8) which is used for covering the open surface of the housing (2),
- at least one sealing member (9) which is placed between the housing (2) and the cover (8),
- at least one insert piece (11) which is placed into the filling hole (24) located on the housing (2), and which enables the filling hole (24) to be closed tightly after the injection of damper liquid under vacuum.

2. A rotary damper (1) according to claim 1, comprising at least one support pin (5) which has a hexagonal cross section placed inside the rotor (4) in order that the rotor (4) provides rigidity and resistance under large loads.

3. A rotary damper (1) according to claim 1, comprising at least one housing (2) which has a cylindrical structure or structural details that can rotate in central axis of a cylindrical space by taking itself a reference.

4. A rotary damper (1) according to claim 1, comprising at least one bearing (3) one of the end surfaces of which is in contact with the bottom surface of the housing with which the other parts in the housing (2) are in relation, and the other end surface of which is in contact with the inner surface forming with the flange (45).

5. A rotary damper (1) according to claim 1, 2, 3 or 4, comprising at least one bearing (3) which has at least one cam opening (32) changing the flow opening depending on the rotor (4) position in the work time of the rotor (4) cam structures (41).

6. A rotary damper (1) according to claim 1, comprising a rotor (4) which has at least one cam structure (41) having surfaces changing the flow opening and enabling to obtain a certain amount of tightness when contacting the surfaces of the bearing (3) piece provided in the cam opening (32) and provide a controlled sealing.

7. A rotary damper (1) according to claim 1 or 6, comprising at least one valve (6) which is rotated by the rotor (4) and thus opens and closes the fluid passage through the channels formed between the rotor (4) and itself.

8. A rotary damper (1) according to claim 1 or 6, comprising a valve (6) which is dragged by being contacted by the area of the rotor (4) forming a planar area by connecting the supporting ribs (44) together and has at least one protrusion (63) having a flexible structural detail.

9. A rotary damper (1) according to claim 1, comprising at least one insert piece (11) which is placed into the filling hole provided at one end of the housing (2).

10. A rotary damper (1) according to claim 1, comprising at least one support pin (5) which is placed inside the rotor (4) by means of thermo-plastic injection molding.

11. A rotary damper (1) according to claim 1 or 6 comprising at least two supporting rib (46) groups which placed with certain intervals on the rotor (4).

12. A rotary damper (1) according to claim 1, comprising at least one second cam face (42) which forms an inclined surface on the first cam face (41).

13. A rotary damper (1) according to claim 6, comprising at least one cam channel (43) which is made on the second cam face (42).

14. A rotary damper (1) according to claim 1 comprising at least one adapter (10) which enables the rotor (4) to be compatible with connections having various geometric shapes and dimension.

15. A rotary damper (1) according to claim 1, comprising a sealing rib (49) which is provided on the supporting ribs (46), on the flexible surface (64) of the valve (6), and which has flexibility and sealing properties.

## Patentansprüche

1. Rotationsdämpfer (1), der während der Arbeitszeit in eine Richtung rotiert, eine Lastdämpfungsfunktion ausführt, in die andere Richtung rotiert, ohne Widerstand zu schaffen, und ermöglicht es, unter verschiedenen Lasten eine ordnungsgemäße Funktion zu erhalten, indem die Flüssigkeitsviskosität stabil gehalten wird, und die Flüssigkeit unter Vakuum zu injizieren;im Wesentlichen umfassend
- mindestens ein Gehäuse (2), in dem ein aus zylindrischen oder teilzylindrischen und gekrümmten Abschnitten oder nur aus gekrümmten Abschnitten bestehender Raum hergestellt ist,
- mindestens eine Verbindungsfläche (21), die in Form einer Öffnung auf der äußeren zylindrischen Oberfläche des Gehäuses (2) hergestellt ist,
- mindestens eine Innenfläche (22), die den inneren Teil des zylinderförmigen Gehäuses (2) bildet,
- mindestens eine innere Rippe (23), die sich in Form eines Vorsprungs über die Innenfläche (22) zur Mitte hin erstreckt,
- mindestens eine Füllloch (24), die auf der Mittelachse des Gehäuses (2) hergestellt ist,
- mindestens eine Kanalverbindungsöffnung (25), die auf der ebenen Oberfläche des Gehäuses (2), auf der das Füllloch (24) positioniert ist, hergestellt wird, die eine Kanalform aufweist, die von der Füllloch (24) ausgeht und sich bis zur Öffnung zwischen den Innenrippen (23) erstreckt,
- mindestens ein Lager (3), das innerhalb des Gehäuses (2) platziert ist und die Steuerung des Durchflusses ermöglicht und eine Trapezform hat,
- mindestens eine Bettungsfläche (31), die durch Öffnen der kurzen Kante des Lagers (3) in Form eines Halbbogens bildet,
- mindestens eine Nockenöffnung (32), die in Form einer Öffnung auf der Bettungsfläche (31) hergestellt ist,
- mindestens einen V-förmigen Lagerkanal (33), der an der Längskante des Lagers (3) hergestellt ist,
- mindestens einen Injektionslochkanal (34), der an der Nockenöffnung (32) hergestellt ist und sich bis zum inneren Teil des Lagerkanals (33) erstreckt,
- mindestens einen Rotor (4), der im Inneren des Gehäuses (2) platziert ist und der einen zylindrischen oder gekrümmten Körperabschnitt aufweist, der sich so rotieren kann, dass seine Mittelachse mit dem Gehäuse (2) identisch ist,
- mindestens eine erste Nockenseite (41), die sich auf der zylindrischen Oberfläche des Rotors (4) befindet und die eine bombenförmige Struktur aufweist,
- mindestens ein Heck (44), das sich am Ende des zylinderförmigen Rotors (4) befindet und dessen Durchmesser kleiner als der Durchmesser des Rotors (4) ist,
- mindestens einen Flansch (45), der sich auf dem Rotor (4) befindet und der eine zylindrische Form konzentrisch zum Rotor (4) aufweist,
- mindestens eine Stützrippe (46), die sich auf der zylindrischen Oberfläche des Rotors (4) befindet und die eine Vorsprungsform aufweist,
- mindestens eine Platzierungsöffnung (47), die entlang der Mittelachse des Rotors (4) hergestellt ist,
- mindestens eine Hecköffnung (48), die am Heck (44) hergestellt ist,
- mindestens einen Stützstift (5), der in die am Rotor (4) hergestellte Platzierungsöffnung platziert wird,
- mindestens ein Ventil (6), das zwischen dem Rotor (4) und dem Gehäuse (2) platziert ist, das eine Bogenform hat und das die Flüssigkeitsbewegung steuert, indem es mit den Bewegungen des Rotors (4) gezogen wird,
- mindestens einen Kanal (61), der auf der Außenfläche des bogenförmigen Ventils (6) hergestellt ist,
- mindestens eine Düse (62), die in den Kanal (61) hergestellt ist,
mindestens einen Vorsprung (63), der sich auf der Innenfläche des bogenförmigen Ventils (6) befindet und der sich linear erstreckt,
- mindestens eine flexible Oberfläche (64), die eine elastische Struktur aufweist, die sich von dem Endpunkt des Vorsprungs (63) aus erstreckt,
- mindestens eine Metallscheibe (7), die auf dem Rotor (4) platziert ist,
mindestens eine Abdeckung (8), die zum Abdecken der offenen Oberfläche des Gehäuses (2) verwendet wird,
- mindestens ein Dichtungselement (9), das zwischen dem Gehäuse (2) und dem Deckel (8) platziert ist,
- mindestens ein Einsatzstück (11), das in die am Gehäuse (2) befindliche Füllloch (24) platziert wird und das ermöglicht, das Füllloch (24) nach dem Einspritzen von Dämpferflüssigkeit unter Vakuum dicht zu verschließen.

2. Rotationsdämpfer (1) nach Anspruch 1, umfassend mindestens einen Stützstift (5), der einen sechseckigen Querschnitt aufweist, der im Inneren des Rotors (4) platziert ist, um dem Rotor (4) Steifigkeit und Widerstand unter großen Lasten zu gewährleisten.

3. Rotationsdämpfer (1) nach Anspruch 1, umfassend mindestens ein Gehäuse (2), das eine zylindrische Struktur oder strukturelle Details aufweist, die sich in der Mittelachse eines zylindrischen Raumes rotieren können, indem sie sich selbst eine Referenz nehmen.

4. Rotationsdämpfer (1) nach Anspruch 1, umfassend mindestens ein Lager (3), dessen eine Endfläche mit der Bodenfläche des Gehäuses in Kontakt steht, mit der die anderen Teile im Gehäuse (2) in Beziehung stehen, und dessen andere Endfläche mit der Innenfläche, die mit dem Flansch (45) gebildet wird, in Kontakt steht.

5. Rotationsdämpfer (1) nach Anspruch 1, 2, 3 oder 4, umfassend mindestens ein Lager (3), das mindestens eine Nockenöffnung (32) aufweist, die die Durchflussöffnung in Abhängigkeit von der Position des Rotors (4) in der Arbeitszeit der Nockenstrukturen (41) des Rotors (4) verändert.

6. Rotationsdämpfer (1) nach Anspruch 1, umfassend einen Rotor (4), der mindestens eine Nockenstruktur (41) mit Oberflächen aufweist, die die Durchflussöffnung verändern und ermöglichen, eine bestimmte Menge an Dichtheit zu erhalten, wenn sie die Oberflächen des Teils von Lager (3), das in der Nockenöffnung (32) vorgesehen ist, kontaktieren und eine kontrollierte Dichtung gewährleisten.

7. Rotationsdämpfer (1) nach Anspruch 1 oder 6, mit mindestens einem Ventil (6), das vom Rotor (4) rotiert wird und somit den Fluiddurchgang durch die zwischen dem Rotor (4) und sich selbst gebildeten Kanäle öffnet und schließt.

8. Rotationsdämpfer (1) nach Anspruch 1 oder 6, umfassend ein Ventil (6), das durch Kontakt mit dem Bereich des Rotors (4) gezogen wird, der durch Verbindung der Stützrippen (44) miteinander einen ebenen Bereich bildet, und mindestens einen Vorsprung (63) mit einem flexiblen Strukturdetail aufweist.

9. Rotationsdämpfer (1) nach Anspruch 1, mit mindestens einem Einsatzstück (11), das in die an einem Ende des Gehäuses (2) vorgesehene Füllloch platziert ist.

10. Rotationsdämpfer (1) nach Anspruch 1, mit mindestens einem Stützstift (5), der im Inneren des Rotors (4) durch Thermoplast-Spritzgießen platziert ist.

11. Rotationsdämpfer (1) nach Anspruch 1 oder 6 umfassend mindestens zwei Gruppen von Stützrippen (46), die mit bestimmten Abständen auf dem Rotor (4) platziert sind.

12. Rotationsdämpfer (1) nach Anspruch 1, umfassend mindestens eine zweite Nockenfläche (42), die auf der ersten Nockenseite (41) eine geneigte Fläche bildet

13. Rotationsdämpfer (1) nach Anspruch 6, mit mindestens einem Nockenkanal (43), der auf der zweiten Nockenseite (42) hergestellt ist.

14. Rotationsdämpfer (1) nach Anspruch 1, umfassend mindestens einen Adapter (10), der es ermöglicht, dass der Rotor (4) mit Verbindungen mit verschiedenen geometrischen Formen und Abmessungen kompatibel ist.

15. Rotationsdämpfer (1) nach Anspruch 1, umfassend eine Dichtungsrippe (49), die an den Stützrippen (46), an der flexiblen Oberfläche (64) des Ventils (6) vorgesehen ist und die Flexibilität und Dichtungseigenschaften aufweist.

## Revendications

1. Amortisseur rotatif (1) ; qui remplit une fonction d'amortissement de la charge tout en tournant dans un sens pendant le temps de travail, tourne dans un autre sens sans créer de résistance et permet d'obtenir un bon fonctionnement sous différentes charges en maintenant la viscosité du liquide stable, et d'injecter le liquide sous vide ; comprenant essentiellement
- au moins un boîtier (2) dans lequel est ménagé un espace composé de sections cylindriques ou partiellement cylindriques et curvilignes ou uniquement de sections curvilignes,
- au moins une surface de connexion (21) qui se présente sous la forme d'une ouverture ménagée sur la surface cylindrique extérieure du boîtier (2),
- au moins une surface intérieure (22) qui forme la partie intérieure du boîtier de forme cylindrique (2),
- au moins une nervure intérieure (23) qui s'étend sous forme d'une saillie au-dessus de la surface intérieure (22) vers le centre,
- au moins un trou de remplissage (24) qui est fait sur l'axe central du boîtier (2),
- au moins une ouverture de connexion de canal (25) qui est ménagée sur la surface plane du boîtier (2) sur laquelle est positionné le trou de remplissage (24), qui a une forme de canal à partir de le trou de remplissage (24) et qui s'étend jusqu'à l'ouverture entre les nervures intérieures (23),
- au moins un palier (3) qui est placé à l'intérieur du boîtier (2) et permet de contrôler le débit, et qui a une forme trapézoïdale,
- au moins une surface de stratification (31) qui est formée par l'ouverture du bord court du palier (3) sous la forme d'un demi-arc,
- au moins une ouverture de came (32) qui se présente sous la forme d'une ouverture ménagée sur la surface de stratification (31),
- au moins un canal de palier en forme de V (33) ménagé sur le bord long du palier (3),
- au moins un canal de trou d'injection (34) qui est ménagé sur l'ouverture de came (32) et s'étend jusqu'à la partie intérieure du canal de palier (33),
- au moins un rotor (4) qui est placé à l'intérieur du boîtier (2), et qui a une section de corps cylindrique ou curviligne qui peut tourner de sorte que son axe central sera le même que celui du boîtier (2),
- au moins une première face de came (41) qui est située sur la surface du cylindre du rotor (4) et qui a une structure en forme de cambrure,
- au moins une queue (44) qui est située à l'extrémité du rotor de forme cylindrique (4), et dont le diamètre est inférieur au diamètre du rotor (4),
- au moins une bride (45) qui est située sur le rotor (4) et qui a une forme cylindrique concentrique avec le rotor (4),
- au moins une nervure de support (46) qui est située sur la surface cylindrique du rotor (4) et qui a une forme en saillie,
- au moins une ouverture de placement (47) qui est faite le long de l'axe central du rotor (4),
- au moins une ouverture de queue (48) qui est ménagée sur la queue (44),
- au moins une broche de support (5) qui est placée dans l'ouverture de placement ménagée sur le rotor (4),
- au moins une vanne (6) qui est placée entre le rotor (4) et le boîtier (2), qui a une forme d'arc, et qui contrôle le mouvement du fluide en étant entraînée avec les mouvements du rotor (4),
- au moins un canal (61) qui est ménagé sur la surface extérieure de la vanne en forme d'arc (6),
- au moins un orifice (62) qui est ménagé sur le canal (61),
- au moins une saillie (63) qui est située sur la surface intérieure de la vanne en forme d'arc (6) et qui s'étend linéairement,
- au moins une surface flexible (64) qui présente une structure élastique s'étendant depuis le point d'extrémité de la saillie (63),
- au moins une rondelle métallique (7) qui est placée sur le rotor (4),
- au moins un couvercle (8) qui est utilisé pour couvrir la surface ouverte du boîtier (2),
- au moins un élément d'étanchéité (9) qui est placé entre le boîtier (2) et le couvercle (8)
- au moins une pièce d'insertion (11) qui est placée dans le trou de remplissage (24) situé sur le boîtier (2), et qui permet de fermer hermétiquement le trou de remplissage (24) après l'injection du liquide de l'amortisseur sous vide.

2. Amortisseur rotatif (1) selon la revendication 1, comprenant au moins une broche de support (5) qui a une section hexagonale placée à l'intérieur du rotor (4) afin que le rotor (4) offre une rigidité et une résistance sous de fortes charges.

3. Amortisseur rotatif (1) selon la revendication 1, comprenant au moins un boîtier (2) qui a une structure cylindrique ou des détails structurels qui peuvent tourner dans l'axe central d'un espace cylindrique en prenant eux-mêmes une référence.

4. Amortisseur rotatif (1) selon la revendication 1, comprenant au moins un palier (3) dont l'une des surfaces d'extrémité est en contact avec la surface inférieure du boîtier avec laquelle les autres parties du boîtier (2) sont en relation, et dont l'autre surface d'extrémité est en contact avec la surface intérieure formant avec la bride (45).

5. Amortisseur rotatif (1) selon la revendication 1, 2, 3 ou 4, comprenant au moins un palier (3) qui a au moins une ouverture de came (32) modifiant l'ouverture d'écoulement en fonction de la position du rotor (4) dans le temps de travail des structures de came (41) du rotor (4).

6. Amortisseur rotatif (1) selon la revendication 1, comprenant un rotor (4) qui a au moins une structure de came (41) ayant des surfaces modifiant l'ouverture d'écoulement et permettant d'obtenir un certain degré d'étanchéité lors du contact avec les surfaces de la pièce de palier (3) prévue dans l'ouverture de came (32) et d'assurer une étanchéité contrôlée.

7. Amortisseur rotatif (1) selon la revendication 1 ou 6, comprenant au moins une vanne (6) qui est entraînée en rotation par le rotor (4) et qui ouvre et ferme ainsi le passage du fluide par les canaux formés entre le rotor (4) et lui-même.

8. Amortisseur rotatif (1) selon la revendication 1 ou 6, comprenant une vanne (6) qui est tirée en étant mise en contact avec la zone du rotor (4) formant une zone plane en reliant les nervures de support (44) entre elles et qui présente au moins une saillie (63) ayant un détail structurel flexible.

9. Amortisseur rotatif (1) selon la revendication 1, comprenant au moins une pièce d'insertion (11) qui est placée dans le trou de remplissage prévu à une extrémité du boîtier (2).

10. Amortisseur rotatif (1) selon la revendication 1, comprenant au moins une broche de support (5) qui est placée à l'intérieur du rotor (4) au moyen d'un moulage par injection thermoplastique.

11. Amortisseur rotatif (1) selon la revendication 1 ou 6 comprenant au moins deux groupes de nervures de support (46) qui se placent avec certains intervalles sur le rotor (4).

12. Amortisseur rotatif (1) selon la revendication 1, comprenant au moins une deuxième face de came (42) qui forme une surface inclinée sur la première face de came (41).

13. Amortisseur rotatif (1) selon la revendication 6, comprenant au moins un canal de came (43) qui est ménagé sur la deuxième face de came (42).

14. Amortisseur rotatif (1) selon la revendication 1 comprenant au moins un adaptateur (10) qui permet au rotor (4) d'être compatible avec des connexions ayant des formes géométriques et des dimensions variées.

15. Amortisseur rotatif (1) selon la revendication 1, comprenant une nervure d'étanchéité (49) qui est prévue sur les nervures de support (46), sur la surface flexible (64) de la vanne (6), et qui a des propriétés de flexibilité et d'étanchéité.
